Europäisches Patentamt

European Patent Office

Office européen des brevets

(19)

(11)  EP 1 575 321 A1

(12)  EUROPEAN PATENT APPLICATION

(43) Date of publication:
    14.09.2005  Bulletin 2005/37

(51) Int Cl.7: **H04Q 7/38**

(21) Application number: 04005944.6

(22) Date of filing: 11.03.2004

(84) Designated Contracting States:
    **AT BE BG CH CY CZ DE DK EE ES FI FR GB GR**
    **HU IE IT LI LU MC NL PL PT RO SE SI SK TR**
    Designated Extension States:
    **AL LT LV MK**

(71) Applicant: **Nortel Networks Limited**
    **St.Laurent, Quebec H4S 2A9 (CA)**

(72) Inventors:
    • **Choukroun, David**
      **78150 Le Chesnay (FR)**

    • **Gruet, Christophe**
      **78180 Montigny le Bretonneux (FR)**
    • **Georgeaux, Eric**
      **78180 Montigny le Bretonneux (FR)**

(74) Representative: **Wächter, Jochen et al**
    **Kroher-Strobel**
    **Rechts- und Patentanwälte**
    **Bavariaring 20**
    **D-80336 München (DE)**

(54)    **Method for the optimization of services in a radio communications network**

(57)    The method for the optimization of services in a radio communications network comprising base stations intended to establish radio links via dedicated or shared channel with mobile stations comprises the steps of

a) measuring a radio link parameter on the basis of a signal transmitted between at least one base station and a mobile station,
b) analyzing said radio link parameter to determine whether it meets a predefined criterion, and establishing a radio link between the base station and the mobile station via dedicated channel if the predefined criterion is met, and,
c) if the predefined criterion is not met, estimating the radial speed of the mobile station with regard to the base station, and deciding whether to establish a radio link between the base station and the mobile station via dedicated channel or shared channel, the decision being based on whether the estimated radial speed is below, between or above a set of predetermined speed thresholds.

Fig. 1

EP 1 575 321 A1

## Description

The present invention relates to a method for the optimization of services in a radio communications network comprising base stations intended to establish radio links with mobile stations.

Mobile radio communications networks generally consist of two sub-networks. Firstly a core network, which has, among others, the following functions: interconnection of the radio communications system with a static network (e.g. Public Switch Telephone Network PSTN), recognition and analysis of connection requests from static or mobile subscribers, the search for static or mobile correspondence, and the routing of messages from the user to the radio channel and supervision of communications. Secondly a radio access network, which is responsible for the radio transmission of messages between the parties via the air interface. The main functions are therefore management of resources in terms of radio channels and of links with the static users, message transmission by means of radio, supervision of the continuity of the radio links and protection against third parties. The radio access network consists of radio relay stations (antennas) and radio control stations. Both types of stations are referred to as base stations, which in the case of a UMTS terrestrial radio access network (UTRAN) are static.

Recently a number of European network providers have launched services based on the UMTS standard which is defined by the 3rd Generation Partnership Program (3GPP) as part of the European Telecommunication Standards Institute (ETSI). The main advantage for users of 3rd generation (3G) mobile communication networks is a broad offering of services. Speed, diversity, and user friendliness of the services have been significantly improved compared to GSM communication which is referred to as 2G.

In order to increase the diversity of services within UMTS and to encourage competition between network providers, 3GPP has defined a framework for bearer services which only guarantee bit rate, bit error rate and delay. The actual application including user interface as seen by the user is called a service. One service can access any number of bearer services. Examples for services and applications supported by UMTS are: internet browsing, audio-on-demand, online gaming, video streaming, video conferencing and personal localization. In order to provide a user of a mobile station with a maximum number of services and applications, the radio resource management of the radio access network must ensure that the radio link properties as for example bit rate, bit error rate and delay are optimized for every connection.

The underlying concept of the present invention is that services can be mapped either on dedicated channels or specific shared channels on a 3G wireless network. For this description, Release 5 of the 3GPP UMTS standard has been chosen to represent the reference of the 3G network. One radio link between a mobile station (also called user equipment UE) and a base station consists of an uplink (UL) where the UE sends a signal to the base station, and a downlink (DL) where the UE receives a signal from the base station. In UMTS the dedicated channels (DCH) are defined for uplink and for downlink, whereas shared channels depend on the link: some are specific for uplink (e.g. Common Control Physical Channel CCPCH) and others for downlink (Dedicated Shared Channel DSCH or High-Speed Dedicated Shared Channel HS-DSCH). HS-DSCH is also referred to as High Speed Downlink Packet Access (HSDPA).

A dedicated channel means that for one UE there are exactly one channel for the uplink and exactly one channel for the downlink. As the bandwidth of one physical channel is limited only certain services which require less than the available bandwidth on a dedicated channel, are able to be offered to a subscriber of e.g. UMTS services.

An established radio link via shared channel means that more than one UE are placed on and therefore share the same physical channel. Therefore the number of services to be offered to a UMTS subscriber can be significantly increased by enlarging the available bandwidth for services in downlink.

A description of HSDPA in detail can be found in 3GPP TSG RAN WG2TS 25.308, "UTRA High Speed Downlink Packet Access (HSDPA); overall description", Release 5, or in the article "UMTS evolution towards high data rates in packet switched mode for downlink transmissions: HSDPA" by Arnaud Taffin, Nortel Networks, published June 20, 2002 in SEE (Société de l'Electricité, de l'Electronique, et des Technologies de l'Information et de la Communication).

It is obvious that the speed of a mobile station or UE relative to the static elements of a radio access network like a base station plays a major role for the allocation of radio resources of a moving mobile station. An example of a radio estimation method of a mobile station velocity is described in EP 1 105 746. Further, FR 2 735 639 discloses a method of controlling handover in a multicellular radio communications network, and speed estimation methods relating thereto.

It is the object of the present invention to provide a method to establish in a simple and fast manner high quality radio links in a radio communications network in order to optimize the number and quality of available services for the mobile user.

The invention thus provides a method for the optimization of services in a radio communications network comprising base stations intended to establish radio link via dedicated or shared channel with mobile stations. In this method a radio link parameter on the basis of a signal transmitted between at least one base station and a mobile station is measured, the radio link parameter is analyzed to determine whether it meets a predefined criterion, and a radio link between the base station and the mobile station via dedicated channel is established, if the predefined criterion is met. If the criterion is not met, the radial speed of the mobile station with regard to the base station is estimated. Depending on whether the estimated radio speed is below, between or above a set of predetermined speed thresholds, it is decided whether to establish a radio link between the base station and a mobile station via dedicated channel or shared channel.

Within the proposed method the radio speed is estimated through a rough estimation of a raw radial speed and further comprises the step of analyzing the estimated raw radial speed of the mobile station. It is then determined whether the estimated raw radial speed is below a first speed threshold. If the raw radial speed level is below the first speed threshold a radio link between the base station and the mobile station via shared channel is established. It is furthermore determined whether the raw radial speed of the mobile station is above a second speed threshold, and a radio link between the base station and a mobile station via dedicated channel is established if the raw radial speed level is above the second speed threshold.

It is particularly advantageous that the step of estimating the radial speed comprises an exact estimation of a fine radial speed. In this exact estimation the estimated fine radial speed of the mobile station in analyzed, it is then determined whether it is below or above a third speed threshold. If the fine radial speed level is below the third speed threshold a radio link between the base station and a mobile station via shared channel is established, or, if the fine radial speed level is above the third speed threshold, a radio link between the base station and a mobile station via dedicated channel is established.

For preference the raw radial speed is estimated using a radial speed estimation function.

It is advantageous that the fine radial speed measurement of the mobile station according to the present invention comprises the steps of sending two location measurement requests from the base station to the mobile station, chronologically separated by a predetermined time interval, receiving and analyzing two location and/or speed measurement responses from the mobile station, and estimating the speed of the mobile station based on the values of the location and/or speed measurement responses and the value of the predetermined time interval.

Overall estimation and calculation times can be decreased if the response of the mobile station to the base station includes location coordinates and current speed values, if the mobile station is equipped with a Global Positioning System (GPS) module.

Superior results can be obtained with the method, if the first speed threshold is set to 3 km/h, the value of the second speed threshold is set to 100 km/h, and the value of the third speed threshold is set to 50 km/h.

The invention further proposes that the method comprises the steps of analyzing the location and/or speed data received from the mobile station, comparing same with a predetermined map including geographical information on the possibility of establishing a radio link between the base station and a mobile station via shared channel, and determining whether such radio link via shared channel is established.

Another advantage of the invention is that the radial speed of the mobile station is estimated in at least one base station. In this radial speed estimation step the estimation is based on speed and/or location data received from the mobile station.

It is of particular advantage for the method of the present invention that the radio link parameter is any of the following parameters: a signal-to-noise ratio (SNR), a power level, a carrier-to-interference (C/I) ratio, a bit error rate (BER), or a block error rate (BLER).

The method according to the invention can be specifically applied to a radio communications network which is a UMTS radio access network, wherein the radio link parameter is a power level, the power level measurement is based on the Received Signal Code Power (RSCP) on the Control Pilot Channel (CPICH) which are defined in the frame work of a UMTS radio access network.

In one method according to the invention the predefined criterion consists of a threshold, and said criterion is met when the radio link parameter is below or above a threshold.

Further details, features and advantages of the present invention can be found in the following description with reference to the drawings, in which:

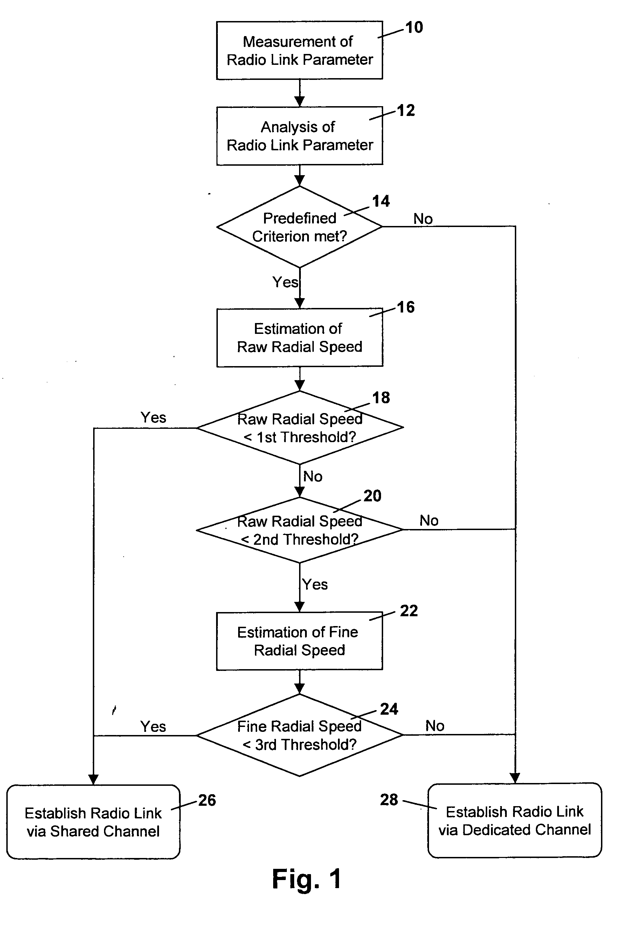

Fig. 1 shows a flow diagram of the method according to the invention.

Fig. 1 illustrates an optimization procedure in a radio communications network in accordance with the invention. In the example described below, all entities are referenced by the names relating to a UMTS radio access network. The term "base station" refers in this context to a NodeB, but it is understood that other entities of the network could execute some of the steps (or even all of them) executed by the base station in this example.

In step 10 of Fig. 1 the parameter of a radio link between a mobile station and a base station in a communications network is measured. In the UMTS example this radio link parameter is a power level, and the power level measurement is based on the Received Signal Code Power (RSCP) on the Control Pilot Channel (CPICH) defined within the UMTS frame work. In the UE the level of the CPICH is measured and its value is reported by the UE to the base station based on standard UE measurement reports. Following is the analysis of the radio link parameter, shown in step 12 of Fig. 1. Then in step 14, the result of the analysis is compared with a predefined criterion that represents a lower threshold for the radio link establishment. In the UMTS example the CPICH level is compared with predetermined power level of typically 5 - 10 % of the maximum cell power, which corresponds to 1-2 W if the maximum cell power is 20 W. If the CPICH level remains lower than the predetermined criterion value the UE is authorized for a radio link between the mobile station and the base station via dedicated channel. The establishment procedure of the radio link via dedicated channel shall not be in detail described in this description since it is known in the art. If the analysis of the radio link parameters reveals that it fulfills the predefined criterion, i.e. in the UMTS example the measured CPICH level is above the predetermined threshold, step 16 is executed which consists of the estimation of a raw radial speed of the mobile station with regard to the base station.

For this speed estimation certain radial speed estimation functions can be used, such as the internal NodeB radial speed estimator. This estimation of the raw radial speed delivers a result which is compared with a first radial speed threshold in step 18 of Fig. 1. In the preferred embodiment of the method according the invention the value for this first speed threshold is 3 km/h. If the result yields that the raw radial speed is below this first threshold the UE qualifies for its services to be based on shared channel, i.e. radio link establishment via HSDPA as known in the art.

If the comparison of the value of the raw radial speed estimation reveals that it is above the first threshold, then a second comparison step 20 is executed. In the UMTS example it has proven advantageous that this second speed threshold is set to 100 km/h. Qualification for a radio link via shared channel is not authorized if the estimated raw radial speed is above the second speed threshold which means that no further steps of data determination are executed and that a radio link via dedicated channel is established for the respective UE.

In case the raw radial speed value of the estimation function is below the second speed threshold (and therefore between the first and the second speed threshold value), another estimation step is necessary. This estimation of a fine radial speed is comprised in step 22 of Fig. 1. For this fine estimation of the radial speed of the mobile station additional data is requested from the mobile station. This is necessary, since there are no further speed estimation functions available within the base station provided by the UMTS frame work. This step comprises up to three stages that have to be executed to obtain the fine level measurement. Firstly two location measurement requests are sent from the base station to the mobile station which are chronologically separated by a predetermined time interval. At a second stage the two location measurement responses are received from the mobile station and analyzed. The location measurement procedures are in UMTS part of the standard framework and are in detail described in the documents TS 22.071 Location Services (Stage 1), TS 23.271 Location Services - Functional. Description (Stage 2), TS 25.413 UTRAN Iu interface Radio Access Network Application Part (RANAP) signalling, TS 23.032 Universal Geographical Area Description (GAD) and TS 29.002 Mobile Application Part (MAP) specification of the 3GPP. The third stage consists of estimating the speed of the mobile station through calculation based on the values of the location measurement responses and the value of the predetermined time interval. The speed calculation can be described with the formula

$$V = \frac{L(t_1) - L(t_0)}{t_1 - t_0}$$

where $L(t_0) = (x_0, y_0, z_0)$ contains the coordinates of the first location measurement and $L(t_1) = (x_1, y_1, z_1)$ contains the coordinates of the second location measurement. The value of $t_1 - t_0$ depends on the raw speed estimation value and can be e.g. 80 seconds for a raw speed of 3 km/h and 10 seconds for a raw speed of 120 km/h.

In an alternative embodiment of the method according to the invention the response of the mobile station to the mobile station may include coordinate and current speed values. This will be the case if the mobile station is equipped with a global positioning system (GPS) module. Standard GPS receiver modules are generally able to deliver location coordinates and speed to a requesting entity.

The result of the fine radial speed estimation is compared with a third speed threshold in step 24 of Fig. 1. In a preferred embodiment of the present invention this third speed threshold is set to 50 km/h. If the estimated fine radial speed value is above the third speed threshold, the respective mobile station does not qualify for the establishment of the radio link via shared channel. Hence a radio link via dedicated channel is established.

In case the estimated fine radial speed is below the third speed threshold, the mobile station qualifies for the establishment of a radio link via shared channel, i. e. HSDPA.

Another embodiment of the method of the invention includes geographical information about HSDPA coverage. The geographical position and/or speed of the mobile station is compared with the HSDPA coverage data to decide whether it is possible to place traffic on HSDPA channels.

Of course, the values of the speed thresholds are not restricted to the exact values of the embodiment as it is disclosed in the description. Also, the radial speed and/or location measurement steps may be included in a single step to reduce the overall processing time and therefore to optimize the method according to the invention.

## Claims

1. A method for the optimization of services in a radio communications network comprising base stations intended to establish radio links via dedicated or shared channel with mobile stations, the method comprising the steps of

   a) measuring a radio link parameter on the basis of a signal transmitted between at least one base station and a mobile station,

   b) analyzing said radio link parameter to determine whether it meets a predefined criterion, and establishing a radio link between the base station and the mobile station via dedicated channel if the predefined criterion is met, and,

   c) if the predefined criterion is not met, estimating the radial speed of the mobile station with regard to the base station, and deciding whether to establish a radio link between the base station and the mobile station via dedicated channel or shared channel, the decision being based on whether the estimated radial speed is below, between or above a set of predetermined speed thresholds.

2. A method according to claim 1, wherein the estimation step of the radial speed comprises a rough estimation of a raw radial speed, further comprising the step of analyzing the estimated raw radial speed of the mobile station, determining whether it is below a first speed threshold, and establishing a radio link between the base station and the mobile station via shared channel if the raw radial speed level is below the first speed threshold.

3. A method according to claim 1, wherein the estimation step of the radial speed comprises a rough estimation of a raw radial speed, further comprising the steps of analyzing the estimated raw radial speed of the mobile station, determining whether it is above a second speed threshold, and establishing a radio link between the base station and the mobile station via dedicated channel if the raw radial speed level is above the second speed threshold.

4. A method according to one of the preceding claims, wherein the estimation step of the radial speed comprises an exact estimation of a fine radial speed, the method further comprising the steps of analyzing the estimated fine radial speed of the mobile station, determining whether it is below or above a third speed threshold, and establishing a radio link between the base station and the mobile station via shared channel if the fine radial speed level is below the third speed threshold, or establishing a radio link between the base station and the mobile station via dedicated channel if the fine radial speed level is above the third speed threshold.

5. A method according to claims 2 or 3, wherein the raw radial speed is estimated using a radial speed estimation function.

6. A method according to claim 4, wherein the fine radial speed measurement of the mobile station comprises the steps of:

   a) sending at least two location measurement requests from the base station to the mobile station, chronologically separated by a predetermined time interval,
   b) receiving and analyzing at least two location and/or speed measurement responses from the mobile station, and
   c) estimating the speed of the mobile station based on the values of the location and/or speed measurement responses and the value of the predetermined time interval.

7. A method according to claim 6, wherein the response of the mobile station to the base station includes location coordinates and current speed values, if the mobile station is equipped with a Global Positioning System (GPS) module.

8. A method according to claim 2, wherein the value of the first speed threshold is 3 km/h.

9. A method according to claim 3, wherein the value of the first speed threshold is 3 km/h and the value of the second speed threshold is 100 km/h.

10. A method according to claim 4, wherein the value of the first speed threshold is 3 km/h, the value of the second speed threshold is 100 km/h and the value of the third speed threshold is 50 km/h.

11. A method according to one of the preceding claims, further comprising the steps of analyzing the location and/or speed data received from the mobile station, comparing same with a predetermined map including geographical information on the possibility of establishing a radio link between the base station and the mobile station via shared channel, and determining whether such radio link via shared channel is established.

12. A method according to one of the preceding claims, wherein the radial speed of the mobile station is estimated in at least one base station.

13. A method according to claim 12, wherein the radial speed of the mobile station is estimated based on speed and/or location data received from the mobile station.

**14.** A method according to one of the preceding claims, wherein the radio link parameter is any one of a signal-to-noise ratio (SNR), a power level, a carrier-to-interference (C/I) ratio, a Bit Error Rate (BER), or a Block Error Rate (BLER).

**15.** A method according to one of the preceding claims, wherein the radio communications network is a UMTS radio access network, the radio link parameter is a power level, and said power level measurement is based on the Received Signal Code Power (RSCP) on the Control Pilot Channel (CPICH) defined in the framework of a UMTS radio access network.

**16.** A method according to one of the preceding claims, wherein the predefined criterion consists of a threshold, said criterion being met when the radio link parameter is below or above the threshold.

**Fig. 1**

Measurement of Radio Link Parameter — 10

Analysis of Radio Link Parameter — 12

Predefined Criterion met? — 14 → No

Yes ↓

Estimation of Raw Radial Speed — 16

Raw Radial Speed < 1st Threshold? — 18 → Yes

No ↓

Raw Radial Speed < 2nd Threshold? — 20 → No

Yes ↓

Estimation of Fine Radial Speed — 22

Fine Radial Speed < 3rd Threshold? — 24 → No / Yes

Establish Radio Link via Shared Channel — 26

Establish Radio Link via Dedicated Channel — 28

**European Patent Office**

## EUROPEAN SEARCH REPORT

Application Number

EP 04 00 5944

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 02/093813 A (PELTOLA JUKKA ; POSTI HARRI (FI); NOKIA CORP (FI)) 21 November 2002 (2002-11-21) * page 12, line 21 - page 19, line 19 * * page 21, line 1 - page 22, line 32 * ----- | 1-16 | H04Q7/38 |
| A | US 6 128 327 A (BIRD WILLIAM ERIC ET AL) 3 October 2000 (2000-10-03) * column 2, line 39 - column 3, line 22 * ----- | 1-16 | |

TECHNICAL FIELDS
SEARCHED (Int.Cl.7)

H04Q

The present search report has been drawn up for all claims

| Place of search | Date of completion of the search | Examiner |
|---|---|---|
| Berlin | 22 July 2004 | LOPEZ PEREZ M C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**ANNEX TO THE EUROPEAN SEARCH REPORT
ON EUROPEAN PATENT APPLICATION NO.**

EP 04 00 5944

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2004

| Patent document cited in search report | | Publication date | Patent family member(s) | | Publication date |
|---|---|---|---|---|---|
| WO 02093813 | A | 21-11-2002 | WO | 02093813 A1 | 21-11-2002 |
| | | | EP | 1391070 A1 | 25-02-2004 |
| US 6128327 | A | 03-10-2000 | AU | 744291 B2 | 21-02-2002 |
| | | | AU | 2345899 A | 16-08-1999 |
| | | | CA | 2319442 A1 | 05-08-1999 |
| | | | CN | 1132349 B | 24-12-2003 |
| | | | EP | 1050121 A1 | 08-11-2000 |
| | | | TW | 431082 B | 21-04-2001 |
| | | | WO | 9939462 A1 | 05-08-1999 |